(19) 

Europäisches
Patentamt
European
Patent Office
Office européen
des brevets

(11) **EP 4 723 064 A1**

(12) **EUROPEAN PATENT APPLICATION**
published in accordance with Art. 153(4) EPC

(43) Date of publication:
08.04.2026 Bulletin 2026/15

(21) Application number: 24935272.5

(22) Date of filing: 11.12.2024

(51) International Patent Classification (IPC):
*G06V 40/12* (2022.01)   *G06V 10/44* (2022.01)
*G06V 10/82* (2022.01)

(86) International application number:
**PCT/CN2024/138576**

(87) International publication number:
**WO 2026/036590 (19.02.2026 Gazette 2026/08)**

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
**BA**
Designated Validation States:
**GE KH MA MD TN**

(30) Priority: 15.08.2024 CN 202411127429

(71) Applicant: SHENZHEN GOODIX TECHNOLOGY
CO., LTD.
Shenzhen, Guangdong 518045 (CN)

(72) Inventors:
• GU, Qin
  Shenzhen, Guangdong 518045 (CN)
• LU, Yifu
  Shenzhen, Guangdong 518045 (CN)
• QIU, Kang
  Shenzhen, Guangdong 518045 (CN)
• CHEN, Feifei
  Shenzhen, Guangdong 518045 (CN)
• FENG, Jilan
  Shenzhen, Guangdong 518045 (CN)

(74) Representative: Kraus & Lederer PartGmbB
Thomas-Wimmer-Ring 15
80539 München (DE)

(54) **METHOD AND APPARATUS FOR IDENTIFYING MEDIUM CONSISTENCY OF FINGERPRINT**

(57)    The present disclosure relates to the technical
field of signal processing, and discloses a method for
recognizing fingerprint medium consistency, comprising:
obtaining current to-be-verified fingerprint data; searching for target fingerprint template data matching the
current to-be-verified fingerprint data in a registered fingerprint template dataset; searching for a target feature
descriptor corresponding to the target fingerprint template data in a template feature descriptor set; and gen-
erating a verification feature descriptor using the pre-
trained feature extraction network based on the current
to-be-verified fingerprint data, and generating a current
medium consistency probability of a verification fusion
feature using a pre-trained feature fusion classification
network based on the verification feature descriptor and
the target feature descriptor. The present disclosure im-
proves the accuracy of fingerprint classification and re-
cognition.

```
┌─────────────────────────────────────────────────┐
│ Obtaining current to-be-verified fingerprint data │──── S101
└─────────────────────────────────────────────────┘
                        │
                        ▼
┌─────────────────────────────────────────────────┐
│ Searching for target fingerprint template data    │
│ matching the current to-be-verified fingerprint    │──── S102
│ data in a registered fingerprint template dataset  │
└─────────────────────────────────────────────────┘
                        │
                        ▼
┌─────────────────────────────────────────────────┐
│ Searching for a target feature descriptor          │
│ corresponding to the target fingerprint template   │──── S103
│ data in a template feature descriptor set          │
└─────────────────────────────────────────────────┘
                        │
                        ▼
┌─────────────────────────────────────────────────┐
│ Generating a verification feature descriptor using │
│ a pre-trained feature extraction network based on  │
│ the current to-be-verified fingerprint data, and   │
│ generating a current medium consistency            │──── S104
│ probability of a verification fusion feature using │
│ a pre-trained feature fusion classification        │
│ network based on the verification feature          │
│ descriptor and the target feature descriptor       │
└─────────────────────────────────────────────────┘
```

**FIG. 1**

EP 4 723 064 A1

## Description

The present disclosure claims priority to Chinese patent application for invention No. 202411127429.7 titled "METHOD FOR RECOGNIZING FINGERPRINT MEDIUM CONSISTENCY AND APPARATUS FOR RECOGNIZING FINGERPRINT MEDIUM CONSISTENCY" and filed on 15 August 2024, the entire content of which is incorporated herein by reference.

## TECHNICAL FIELD

Embodiments of the present disclosure relate to the technical field of signal processing, and particularly relates to a method for recognizing fingerprint medium consistency and an apparatus for recognizing fingerprint medium consistency.

## BACKGROUND

Fingerprint recognition is a widely popular biorecognition technology. This technology plays an important role in identity authentication in many fields such as smart phone unlocking, financial transactions, and access control. Over the past decade, with the upgrade of sensor technology, fingerprint recognition has undergone a system alteration from capacitive fingerprint to under-screen optical fingerprint and then to under-screen ultrasonic fingerprint. The above fingerprint sensor obtains sound, light and electrical signals, performs two-dimensional imaging on a fingerprint texture pressed on the sensor, and performs two-dimensional matching with registered fingerprint template data, thereby implementing identity recognition.

In recent years, anti-counterfeiting solutions for ultrasonic fingerprints have attracted more and more attention. These methods mainly include explicit calculation and manual fitting of real-time physical features such as acoustic impedance and surface distance based on ultrasonic echo signals, and comparison of distances between these manual features and fitting quantity of physical features of a static real finger collected offline, to implement binary classification and recognition of a real finger of a living body and a prosthetic fingerprint of a non-living body.

However, the above fingerprint recognition method uses the static finger collected offline as an analysis object, and both the set classification threshold interval and statistical distribution law are heavily dependent on collected statistical features of the real and prosthetic fingers. During recognition of real fingerprints of extreme populations with fingerprints failing to have the statistical features (such as molting, wide texture, or shallow texture) or prosthetic fingerprints made of novel medium materials, fingerprint classification and recognition errors tend to occur, so that the real fingerprints identical with a template fail in unlocking or the prosthetic fingerprints made of the novel medium materials succeed in spoof.

## SUMMARY

In view of this, the present disclosure provides a method for recognizing fingerprint medium consistency, to solve the problem of how to reduce errors in current fingerprint classification and recognition.

In a first aspect, the present disclosure provides a method for recognizing fingerprint medium consistency, comprising:

obtaining current to-be-verified fingerprint data;

searching for target fingerprint template data matching the current to-be-verified fingerprint data in a registered fingerprint template dataset;

searching for a target feature descriptor corresponding to the target fingerprint template data in a template feature descriptor set, wherein the template feature descriptor set is generated using a pre-trained feature extraction network based on the registered fingerprint template dataset; and

generating a verification feature descriptor using the pre-trained feature extraction network based on the current to-be-verified fingerprint data, and generating a current medium consistency probability of a verification fusion feature using a pre-trained feature fusion classification network based on the verification feature descriptor and the target feature descriptor, wherein the fusion feature is obtained by fusion of the verification feature descriptor and the target feature descriptor.

In a second aspect, the present disclosure provides an apparatus for recognizing fingerprint medium consistency, comprising:

a data obtaining module configured to obtain current to-be-verified fingerprint data;

a data search module configured to search for target fingerprint template data matching the current to-be-verified fingerprint data in a registered fingerprint template dataset;

a feature search module configured to search for a target feature descriptor corresponding to the target fingerprint template data in a template feature descriptor set, wherein the template feature descriptor set is generated using a pre-trained feature extraction network based on the registered fingerprint template dataset; and

a probability generation module configured to generate a verification feature descriptor using the pre-trained feature extraction network based on the current to-be-verified fingerprint data, and generate a current medium consistency probability of a verification fusion feature using a pre-trained feature fusion classification network based on the verification feature descriptor and the target feature descriptor, wherein the fusion feature is obtained by fusion of the verification feature descriptor and the target feature descriptor.

In a third aspect, the present disclosure provides an apparatus, comprising:

a fingerprint sensor system configured to obtain current to-be-verified fingerprint data;

a memory system; and

a control system configured to electrically communicate with an ultrasonic fingerprint sensor system, and further configured to: execute the method for recognizing fingerprint medium consistency in the first aspect or any one corresponding embodiment thereof.

In a fourth aspect, the present disclosure provides an apparatus, comprising:

a fingerprint sensor system configured to obtain current to-be-verified fingerprint data;

a memory system; and

a control apparatus configured to cause a computer to execute the method for recognizing fingerprint medium consistency in the first aspect or any one corresponding embodiment thereof.

The method for recognizing fingerprint medium consistency provided in the above embodiments of the present disclosure generates a verification feature descriptor of current to-be-verified fingerprint data using a pre-trained feature extraction network, determines a target feature descriptor of target fingerprint template data matching the current to-be-verified fingerprint data, and then generates a current medium consistency probability corresponding to a verification fusion feature using a pre-trained feature fusion classification network based on the verification feature descriptor and the target feature descriptor, to determine, when the current medium consistency probability is greater than a probability threshold, that a medium of the current to-be-verified fingerprint data is same as a medium of the target fingerprint template data without the need to consider statistical distribution of collected fingerprints of a real finger and a prosthetic finger, thereby avoiding the problems such as poor finger stability, poor system stability and poor scalability of fingerprint classification determined based on the statistical distribution of the fingerprints, and improving the accuracy of fingerprint classification and recognition.

BRIEF DESCRIPTION OF DRAWINGS

To more clearly describe technical solutions of specific embodiments of the present disclosure, drawings to be used in the description of the specific embodiments will be briefly introduced below. Apparently, the drawings described below are some embodiments of the present disclosure. For those of ordinary skills in the art, other drawings may also be obtained based on these drawings without creative work.

FIG. 1 is a schematic flowchart of a method for recognizing fingerprint medium consistency according to an embodiment of the present disclosure;

FIG. 2 is a schematic flowchart of a method for training a feature extraction network and a feature fusion classification network according to an embodiment of the present disclosure;

FIG. 3a is a schematic flowchart of network training and fingerprint recognition of a method for recognizing fingerprint medium consistency according to an embodiment of the present disclosure;

FIG. 3b is an example schematic diagram of a ternary pair sample according to an embodiment of the present disclosure;

FIG. 3c is a schematic diagram of raw domain data of fingerprint data according to an embodiment of the present disclosure;

FIG. 3d is a schematic diagram of fingerprint imaging data of fingerprint data according to an embodiment of the present disclosure;

FIG. 3e is a schematic diagram of preprocessed and enhanced fingerprint imaging of fingerprint data according to an embodiment of the present disclosure;

FIG. 3f is a schematic diagram of feature domain vector representation based on a deep convolutional neural network according to an embodiment of the present disclosure;

FIG. 3g is a schematic flowchart of offline network training and online chip deployment according to an embodiment of the present disclosure;

FIG. 4 is a structural block diagram of an apparatus for recognizing fingerprint medium consistency according to an embodiment of the present disclosure; and

FIG. 5 is a schematic structural diagram of hardware of a computer device in an embodiment of the present disclosure.

DETAILED DESCRIPTION

In order to make objectives, technical solutions, and advantages of embodiments of the present disclosure clearer, the technical solutions in the embodiments of the present disclosure will be clearly and completely described below with reference to the drawings in the embodiments of the present disclosure. Apparently, the described embodiments are some, instead of all, of the embodiments of the present disclosure. All other embodiments obtained by those skilled in the art based on the embodiments of the present disclosure without creative work are encompassed within the scope of protection of the present disclosure.

Fingerprint recognition is a widely popular biorecognition technology. This technology plays an important role in identity authentication in many fields such as smart phone unlocking, financial transactions, and access control.

Over the past decade, with the upgrade of sensor technology, fingerprint recognition has undergone a system alteration from capacitive fingerprint to under-screen optical fingerprint and then to under-screen ultrasonic fingerprint. The above fingerprint sensor obtains sound, light and electrical signals, performs two-dimensional imaging on a fingerprint texture pressed on the sensor, and performs two-dimensional matching with registered fingerprint template data, thereby implementing identity recognition. This stage is referred to as a "plane matching" stage.

In recent years, anti-counterfeiting solutions for ultrasonic fingerprints have attracted more and more attention. These methods mainly include explicit calculation and manual fitting of real-time physical features such as acoustic impedance and surface distance based on ultrasonic echo signals, and comparison of distances between these manual features and fitting quantity of physical features of a static real finger collected offline, to implement binary classification and recognition of a real finger of a living body and a prosthetic fingerprint of a non-living body.

The main technical disadvantages of the above related art include:

a. Poor finger stability: the above solution for "manual feature" uses a static finger collected offline as an analysis object, and both the set classification threshold interval and statistical distribution law are heavily dependent on collected statistical features of the real and prosthetic fingers. This leads to serious problems such as misclassification or even unlock failure for fingers of some extreme populations (such as molting, wide texture, or shallow texture).

b. Poor system stability: in a practical application, considering the differences between a system environment where machines are mass produced and a system environment where fingerprints are collected using the machines, it is difficult to directly apply statistical distribution obtained from samples collected by a fixed machine to all machines, so that the mentioned method has low system robustness and low mass production and adaptation efficiency.

c. Poor scalability: the above related art focuses on the binary classification problem of recognizing "real" and "prosthetic". Once "real" fingers of particular populations and "prosthetic" fingerprints made of novel medium materials appear, the classification model built based on historical data will become invalid, and parameters need to be re-updated to adapt to binary classification problem of the novel mediums.

In order to effectively measure the medium sameness reflected in registered fingerprint template data and the current to-be-verified fingerprint data (that is, a current unlocking and pressing sample) in a high-dimensional space based on texture matching, in view of the defects of this detection technology, such as poor generalization and high deployment costs, the present disclosure presents a method for recognizing fingerprint medium consistency relying on deep learning technology, which is not limited to the fixed concept of classification of "living body" and "non-living body", but focuses on measuring the medium sameness of the registered fingerprint template data and the current to-be-verified fingerprint data (that is, the current unlocking and pressing sample). The disclosure is divided into two main stages: offline training and online chip-terminal deployment.

According to an embodiment of the present disclosure, a method embodiment for recognizing fingerprint medium consistency is provided. It should be noted that steps shown in the flowchart of the attached figure can be executed in a computer system with, e.g., a set of computer-executable instructions, and although a logical sequence is shown in the flowchart, in some cases, the shown or described steps can be executed in a different sequence than here.

In this embodiment, a method for recognizing fingerprint medium consistency is provided, and a client or a server may serve as an execution body. The client may be a mobile terminal, such as a mobile phone or a tablet computer, or may be a fixed terminal device. The server can obtain the current to-be-verified fingerprint data sent from the client, and return the result obtained by executing the method for recognizing fingerprint medium consistency to the client. The result may be: a current medium consistency probability, a medium consistency recognition result determined based on the current medium consistency probability, or a fingerprint recognition result determined based on the current medium consistency probability.

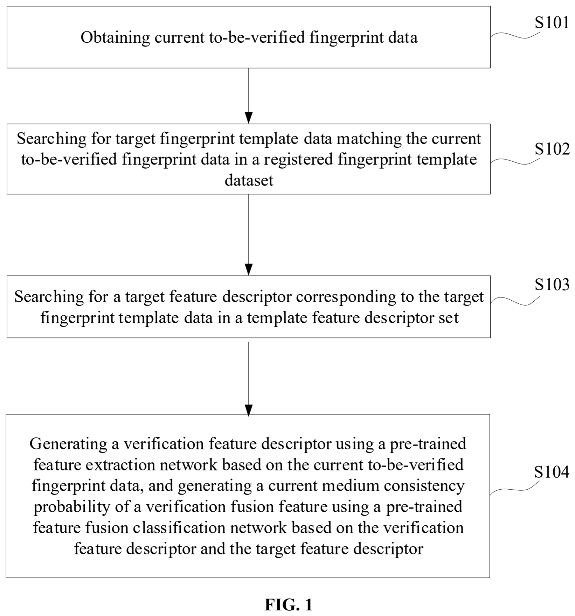

FIG. 1 is a flowchart of a method for recognizing fingerprint medium consistency according to an embodiment of the present disclosure. As shown in FIG. 1, the process includes the following steps:

Step S101: obtaining current to-be-verified fingerprint data.

In this embodiment, the above execution body can obtain Raw domain fingerprint data of a to-be-detected object in an original state without any processing via a fingerprint sensor in the prior art or future technology, such as obtaining Raw domain image data or signal data.

For example, the above execution body can obtain the current to-be-verified fingerprint data via a capacitive fingerprint sensor: when a finger presses on the sensor, valleys and ridges of the fingerprint will form different capacitance values, which are converted into digital fingerprint signals.

The above execution body can obtain the current to-be-verified fingerprint data using an optical fingerprint sensor: the optical fingerprint sensor captures light reflected from a fingerprint pressed on the screen to form a fingerprint image.

The above execution body can obtain the current to-be-verified fingerprint data using an ultrasonic fingerprint sensor: the ultrasonic fingerprint sensor sends an ultrasonic pulse and receives a reflected signal thereof to plot a three-dimensional image of the fingerprint.

Then, the above execution body can use the Raw domain fingerprint data or Base fingerprint imaging obtained by preprocessing the Raw domain fingerprint data as the current to-be-verified fingerprint data.

Step S102: searching for target fingerprint template data matching the current to-be-verified fingerprint data in a registered fingerprint template dataset.

In this embodiment, after the current to-be-verified fingerprint data is obtained, it can be compared with a template in the registered fingerprint template dataset to search for the target fingerprint template data matching the current to-be-verified fingerprint data.

The registered fingerprint template dataset may comprise a plurality of fingerprint feature templates obtained by pre-converting fingerprint images of users into templates and storing the templates.

The process of comparing the current to-be-verified fingerprint data with the template in the registered fingerprint template dataset usually involves extracting features of the current to-be-verified fingerprint data (such as ridge endpoints, bifurcation points, or detail points) and comparing them with features in the registered fingerprint template data.

The comparison algorithm may adopt a matching strategy in various prior art or future to-be-developed technologies, which is not limited in the present disclosure. For example, the comparison algorithm may adopt, e.g., detail-based matching or mode-based matching, to find out the target fingerprint template data matching the current to-be-verified fingerprint data.

It is understandable that before comparing the current to-be-verified fingerprint data with the registered fingerprint template data, the current to-be-verified fingerprint data may be further preprocessed. The preprocessing step may include, e.g., denoising, contrast ratio enhancement, binarization, direction estimation, and segmentation, to better extract features of the fingerprint.

In some specific examples, the preprocessing the current to-be-verified fingerprint data may include at least one of: spatial domain rotation, affine transformation, displacement, flipping, denoising, enhancement, range quantization, temporal domain smoothing, and temporal domain amplitude extraction.

Step S103: searching for a target feature descriptor corresponding to the target fingerprint template data in a template feature descriptor set.

In this embodiment, the template feature descriptor set is generated using a pre-trained feature extraction network based on the registered fingerprint template dataset. Therefore, there is a one-to-one mapping relationship between registered fingerprint templates in the registered fingerprint template dataset and template feature descriptors in the template feature descriptor set. According to the mapping relationship, the above execution body can map a position of the target fingerprint template data in the registered fingerprint template dataset to a corresponding position in the registered fingerprint template dataset, and use a feature descriptor at the corresponding position as the target feature descriptor.

Step S104: generating a verification feature descriptor using a pre-trained feature extraction network based on the current to-be-verified fingerprint data, and generating a current medium consistency probability of a verification fusion feature using a pre-trained feature fusion classification network based on the verification feature descriptor and the target feature descriptor.

In this embodiment, the pre-trained feature extraction network can be implemented using a deep learning model. Highly representative feature vectors are extracted from an original fingerprint image or fingerprint signal, that is, feature descriptors are extracted.

These feature descriptors capture key information in the fingerprint image or fingerprint signal, such as ridges, valleys, frequencies, and detail points (e.g., endpoints and bifurcation points) of the fingerprint, but remove unnecessary details and noise, so as to convert high-dimensional and complex fingerprint image data into low-dimensional, easily comparable and easily processable feature vectors.

After generating the verification feature descriptor using the pre-trained feature extraction network based on the current to-be-verified fingerprint data, the above execution body can fuse the verification feature descriptor and the target feature descriptor using the pre-trained feature fusion classification network to obtain the verification fusion feature, and then determine the current medium consistency probability of the fusion feature.

The method for fusing the verification fusion feature may include simple splicing, weighted summation, or more complex learning-based fusion. In some specific examples, the verification fusion feature may be generated by at least one of: a dimension-wise mean value regularized fusion mode, a quantitative fusion mode, a spatial channel stacking fusion mode, and a dimensional differential fusion mode.

The current medium consistency probability may be a medium sameness score. A probability threshold is a score value for determining whether the verification feature descriptor and the target feature descriptor are of a same medium.

After determining the current medium consistency probability of the fusion feature, when the current medium consistency probability is greater than the probability threshold, a medium of the current to-be-verified fingerprint data being same as a medium of the target fingerprint template data can be determined. In a specific example, when the medium sameness score is greater than 0.5, the medium of the current to-be-verified fingerprint data being same as the medium of the target fingerprint template data can be determined, and otherwise, they are different mediums.

The medium here may include: a fingerprint medium in the prior art or future to-be-developed technologies, which is not limited in the present disclosure. In some specific examples, the medium of the target fingerprint template data may comprise at least one of: pericarp, skin, white rubber, black rubber, resin, print paper, a conductive pen, carbon powder, and dust.

It is understandable that when whether the current to-be-verified fingerprint data and the target fingerprint template data are a same medium or different mediums is determined, a verification and recognition result of a current to-be-verified fingerprint may also be outputted based on the determination result.

The method for recognizing fingerprint medium consistency provided in this embodiment generates a verification feature descriptor of current to-be-verified fingerprint data using a pre-trained feature extraction network, determines a target feature descriptor of target fingerprint template data matching the current to-be-verified fingerprint data, and then generates a current medium consistency probability corresponding to a verification fusion feature using a pre-trained feature fusion classification network based on the verification feature descriptor and the target feature descriptor, to determine, when the current medium consistency probability is greater than a probability threshold, that a medium of the current to-be-verified fingerprint data is same as a medium of the target fingerprint template data without the need to consider statistical distribution of fingerprints, thereby avoiding the problems such as poor finger stability, poor system stability and poor scalability of fingerprint classification determined based on the statistical distribution of the fingerprints, and improving the accuracy of fingerprint classification and recognition.

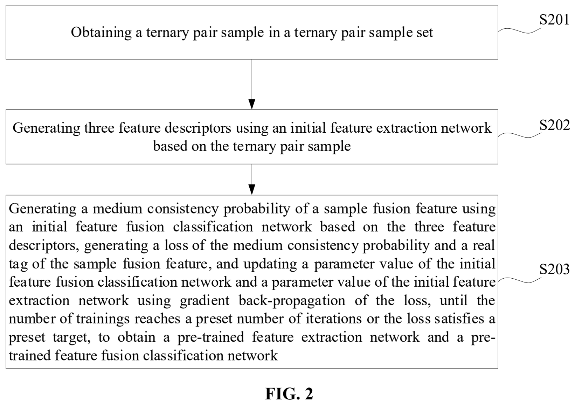

In this embodiment, a method for training a feature extraction network and a feature fusion classification network is provided, which can be used for the above mobile terminal, such as a mobile phone or a tablet computer. FIG. 2 is a flowchart of the method for training a feature extraction network and a feature fusion classification network according to an embodiment of the present disclosure. As shown in FIG. 2, the process includes the following steps:

Step S201: obtaining a ternary pair sample in a ternary pair sample set.

In this embodiment, the ternary pair sample comprises an anchor sample of fingerprint data, a positive training sample, and a negative training sample, wherein the anchor sample and the positive training sample are of a same template medium, and the anchor sample and the negative training sample are of different template mediums.

The ternary pair sample may be obtained by sampling raw domain signals for more than 2 (including 2) mediums using a preset fingerprint sensor (capacitive, optical, or ultrasonic). Pressing raw domain datasets of different medium components may be expressed as A, B, C, ....

Then, the ternary pair sample can be constructed. In a specific example, each ternary pair sample comprises two samples i and j from a same medium dataset, and another sample k from a different medium dataset. The samples i, j, and k can correspond to the positive training sample, the anchor sample, and the negative training sample respectively.

Step S202: generating three feature descriptors using an initial feature extraction network based on the ternary pair sample.

In this embodiment, the three feature descriptors may comprise: an anchor feature descriptor of the anchor sample, a positive feature descriptor of the positive training sample, and a negative feature descriptor of the negative training sample.

The initial feature extraction network is an initial network of the pre-trained feature extraction network in the step S104, has equal structure and function as the initial network, except that network parameter values are initial parameter values that have not been updated and iterated, and will not be repeated here.

In a specific example, the initial feature extraction network can be implemented using a deep convolutional neural network. For the three samples $Samp_A^i$, $i \in [1,2,3]$ in the ternary pair, feature mapping is performed to obtain three feature vectors $Feat_{A\cdot}^i$, $i \in [1,2,3]$ with a length of 10.

Step S203: generating a medium consistency probability of a sample fusion feature using an initial feature fusion classification network based on the three feature descriptors, generating a loss of the medium consistency probability and a real tag of the sample fusion feature, and updating a parameter value of the initial feature fusion classification network and a parameter value of the initial feature extraction network using gradient back-propagation of the loss, until the number of trainings reaches a preset number of iterations or the loss satisfies a preset target, to obtain a pre-trained feature extraction network and a pre-trained feature fusion classification network.

In this embodiment, the sample fusion feature may comprise: a positive sample fusion feature obtained by fusion of the anchor feature descriptor and the positive feature descriptor, and a negative sample fusion feature obtained by fusion of the anchor feature descriptor and the negative feature descriptor.

Specifically, in a specific example, the three feature vectors with the length of 10 obtained by mapping in the ternary pair can be combined pairwise, wherein two 10-dimensional feature vectors from the same medium dataset are combined into a same medium positive sample fusion feature $[Feat_A^1,\ Feat_A^2]$ assigned with a tag 1, and two 10-dimensional feature vectors from non-same medium dataset are combined into a non-homologous negative sample fusion feature $[Feat_A^1,\ Feat_A^3]$ assigned with a tag 0.

The initial feature fusion classification network may be obtained by cascading networks for feature fusion and classification in the prior art, which is not limited in the present disclosure. In a specific example, a decision classification layer may be constructed using a fully connected network, and a medium consistency probability of the positive and negative sample fusion features is predicted based on the positive and negative sample fusion features to complete medium sameness classification and recognition of the positive and negative sample fusion features.

The loss of the medium consistency probability and real tags of the positive and negative sample fusion features can be implemented using a loss function for determining a loss between a predicted value and a real value of a classification problem in the prior art or future to-be-developed technologies, which is not limited in the present disclosure.

In a specific example, based on the consistency of the classification results and the real tags of the positive and negative sample fusion features, a binary cross entropy loss function can be used for gradient back-propagation:

$$Loss_{BCE} = -y \cdot log(x) - (1 - y) \cdot log(1 - x)$$

wherein, $Loss_{BCE}$ is the loss of the medium consistency probability and the real tags predicted based on the positive and negative sample fusion features, y is the real tag (0 or 1), and x is a probability predicted as the positive sample fusion feature. When y = 1 (that is, the sample belongs to a positive sample), the loss function is simplified as $Loss_{BCE} = -log(x)$, the loss value is close to 0, and the loss will be very large. When y = 0 (that is, the sample belongs to a negative sample), the loss function is simplified as $Loss_{BCE} = -log (1 - x)$, the loss value is close to 1, and the loss will be very large.

In this case, in accordance with the sequence of the gradient back-propagation, parameters of the fully connected decision classification layer and the deep convolutional neural network are updated sequentially, to achieve performance optimization and training iteration, until the number of loop iterations (epochs) of the provided training dataset reaches 200, or the loss function reaches a preset value, the iteration is ended, the gradient back-propagation is ended, weight coefficients in the network are no longer updated, and the fully connected decision classification layer and the deep convolutional neural network are saved respectively.

The method for training a feature extraction network and a feature fusion classification network in this embodiment predicts the medium consistency probability of the positive and negative sample fusion features using the pre-trained feature extraction network and the pre-trained feature fusion classification network under the guidance of the tag of the sample fusion feature of the registered fingerprint template data based on the ternary pair sample, generates the loss with the real tag, and then updates the parameter value of the initial feature fusion classification network and the parameter value of the initial feature extraction network using the gradient back-propagation of the loss until the number of trainings reaches the preset number of iterations or the loss satisfies the preset target. The pre-trained feature extraction network and the pre-trained feature fusion classification network obtained through this training process effectively aggregate same medium features and extract implicit medium features, predict the medium consistency probability, overcome differentiated interference from different system hardware environment parameters and different finger types, present exclusive distribution features for non-homologous mediums, and have more robust non-same medium attack detectability.

In some optional implementations of this embodiment, the initial feature extraction network comprises: a spatial domain enhancement subnetwork, a feature extraction subnetwork, and a medium description subnetwork connected sequentially. Generating the three feature descriptors using the initial feature extraction network based on the ternary pair sample comprises: preprocessing and enhancing the ternary pair sample using the spatial domain enhancement subnetwork to obtain a preprocessed feature tensor; reducing a spatial resolution of the preprocessed feature tensor using the feature extraction subnetwork, and increasing the number of channels of the preprocessed feature tensor, to obtain a spatially concentrated feature tensor; and performing information integration and semantic extraction on the spatially concentrated feature tensor using the medium description subnetwork, to obtain feature descriptors in a preset number of dimensions representing features of a physical medium.

In this implementation, the initial feature extraction network can extract a deep-layer descriptor with the features of the physical medium from inputted fingerprint data by cascading the spatial domain enhancement subnetwork, the feature extraction subnetwork, and the medium description subnetwork, to provide powerful feature representation for subsequent classification, recognition, or analysis tasks.

The spatial domain enhancement subnetwork can preprocess and enhance the inputted fingerprint data, improve the image quality through a spatial domain operation (such as spatial domain filtering, contrast ratio enhancement, or sharpening), remove noise, and enhance the visibility and contrast ratio of fingerprint textures, to obtain the preprocessed feature tensor. This processing can ensure that features can be extracted from clearer, higher-quality images in subsequent processing stages.

The feature extraction subnetwork can further process the preprocessed feature tensor, reduce the spatial resolution through an operation such as the convolutional layer or the pooling layer, and increase the number of channels to implement feature concentration and abstraction, thereby obtaining the spatially concentrated feature tensor, reducing the computational burden while maintaining key fingerprint information, increasing the feature description ability, and preparing for subsequent extraction of advanced features.

The medium description subnetwork can perform in-depth information integration and semantic extraction on the spatially concentrated feature tensor, and can obtain intrinsic relationship and semantic meaning between features using an advanced feature extraction method such as a fully connected layer, a recurrent neural network, or an attention mechanism, thereby obtaining the feature descriptor in the preset number of dimensions representing the features of the physical medium, and extracting deep-layer features reflecting the features of the physical medium (such as a microstructure of finger skin, sweat distribution, or contact pressure) from the fingerprint image, to more effectively perform fingerprint recognition, classification, or analysis.

The initial feature extraction network in this embodiment realizes high-layer representation from raw fingerprint data to the features of the physical medium through a gradually deepening feature extraction process, completes mapping from low-layer visual features or sensory features to high-layer semantic features, and improves the effectiveness of the feature descriptor of the generated inputted fingerprint data.

In some optional implementations of this embodiment, the above spatial domain enhancement subnetwork comprises: a first convolutional layer; the feature extraction subnetwork comprises: a first convolutional block, a first transition layer, a second convolutional block, and a second transition layer connected sequentially; wherein the first convolutional block is formed by continuously stacking a plurality of convolution kernels of a preset size; the first transition layer comprises a second convolutional layer and a first average pooling layer connected sequentially; the second convolutional block is formed by continuously stacking a plurality of convolution kernels of a preset size; the second transition layer comprises a third convolutional layer and a second average pooling layer connected sequentially; and the medium description subnetwork comprises: a depth-wise separable convolutional layer, and the depth-wise separable convolutional layer comprises a fourth convolutional layer and a third average pooling layer connected sequentially.

In this implementation, the spatial domain enhancement subnetwork starts with the first convolutional layer, and performs preliminary feature extraction and spatial domain image enhancement on the inputted fingerprint data. The first convolutional layer extracts image features using a convolution kernel (also referred to as a filter) in a manner of a sliding window, which can capture a local feature in the image, such as an edge or an angular point, to provide the basis for subsequent processing.

The feature extraction subnetwork is formed by sequentially connecting the first convolutional block, the first transition layer, the second convolutional block, and the second transition layer.

The first convolutional layer is formed by continuously stacking a plurality of convolution kernels of a preset size, that is, a plurality of convolutional layers with the convolution kernels of the preset size in the deep convolutional neural network are connected in series. A first layer usually learns low-layer features such as edges and textures, while a deep-layer convolution kernel can be combined with features of a previous layer to learn more complex and more abstract features, such as local structure, shape, or mode of an object, thereby deeply extracting image features.

The first transition layer comprises the second convolutional layer and the first average pooling layer. The second convolutional layer may be configured to perform further feature extraction or feature conversion, translation, and local information restructuring. The first average pooling layer is configured to reduce spatial dimension of a feature map (i.e., downsampling), while retaining important information, reducing the calculation workload, and performing information integration.

The second convolutional block, similar to the first convolutional block, can use convolution kernels with configurations same as or different from those of the first convolutional block, to extract deeper-layer features.

The second transition layer comprises the third convolutional layer and the second average pooling layer, has similar functions to the first transition layer, and can be implemented with a configuration same as or different from that of the first transition layer, to integrate and optimize information for a deeper-layer feature map.

The medium description subnetwork ends the feature extraction network with the depth-wise separable convolutional layer. The depth-wise separable convolutional layer comprises the fourth convolutional layer and the third average pooling layer. The fourth convolutional layer fuses high-dimensional information after information integration, and the third average pooling layer completes integration of the fused information, thereby achieving medium description.

The initial feature extraction network in this implementation extracts high-layer features of the inputted fingerprint data by further clarifying network structures of the spatial domain enhancement subnetwork, the feature extraction subnetwork, and the medium description subnetwork, thereby further improving the effectiveness of the feature descriptor of the inputted fingerprint data generated by the feature extraction network.

In some optional implementations of this embodiment, the pre-trained feature extraction network and the pre-trained feature fusion classification network are trained by, and further comprise: performing at least one of preprocessing imaging below on the ternary pair sample: spatial domain rotation, affine transformation, displacement, flipping, denoising, enhancement, range quantization, temporal domain smoothing, and temporal domain amplitude extraction; and generating the three feature descriptors using the initial feature extraction network based on the ternary pair sample comprises: generating the three feature descriptors using the initial feature extraction network based on the ternary pair sample after preprocessing imaging.

In this implementation, considering that there are significant differences in signal modalities of raw domain fingerprint data inputted from different fingerprint sensors, a particular preprocessing imaging process can be constructed before the data is sent to the feature extraction network, thereby performing preprocessing imaging of the raw domain fingerprint data using one or more of spatial domain rotation, affine transformation, displacement, flipping, denoising, enhancement, range quantization, temporal domain smoothing, and temporal domain amplitude extraction. Then, the preprocessed and imaged ternary pair sample is inputted into the initial feature extraction network to obtain the corresponding three feature descriptors.

In the method for generating the three feature descriptors based on the ternary pair sample in this implementation, the ternary pair can be preprocessed, and then inputted into the initial feature extraction network, thereby achieving spatial and temporal domain signal enhancement while retaining corresponding quantitative physical features of the medium.

In some optional implementations of this embodiment, when the initial feature fusion classification network generates the medium consistency probability of the sample fusion feature, the sample fusion feature is generated based on at least one of: a dimension-wise mean value regularized fusion mode, a quantitative fusion mode, a spatial channel stacking fusion mode, and a dimensional differential fusion mode.

In this implementation, the dimension-wise mean value regularized fusion mode is to calculate in each dimension a mean value of feature data involved in the fusion in this dimension. The calculated mean value in each dimension is regularized by adjusting the magnitude or proportion of the mean value based on requirements to ensure that the fused feature has a reasonable numerical range. Then, the regularized mean value in each dimension is recombined into a new feature vector or matrix to obtain the fused feature.

In the quantitative fusion mode, a suitable quantization operator, such as uniform quantization or non-uniform quantization, can be selected based on data features and fusion requirements. Then, the inputted data is quantized, that is, continuous data values are mapped to discrete quantization levels. If a plurality of quantization operators are used, their outputs are fused based on certain rules (such as weighted mean or maximum/minimum value selection). Then, necessary post-processing, such as denoising or smoothing, can be performed on the quantitative fusion result to obtain the fused feature.

The channel stacking fusion mode in the spatial domain can separate each channel of a multi-channel image (such as an RGB image) as an independent feature map. Then, feature maps from different sources or after different processing are stacked in accordance with the channel dimension to form a new multi-channel image, and then the stacked multi-channel image is adjusted as necessary, such as adjusting channel sequence or applying normalization, to obtain the fused feature.

In the dimensional differential fusion mode, for multidimensional data, a difference (first-order difference or high-order difference) between adjacent dimensions or adjacent time points is calculated to capture change trends of data in different dimensions. Then, the calculated dimensional differences are fused according to certain rules, such as weighted mean or summation. Then, the differential fusion result may be subjected to an operation, such as nonlinear transformation or feature selection, to obtain the fused feature.

It is understandable that the above fusion mode can be adjusted based on a practical application scenario or experience of those skilled in the art, which is not limited in the present disclosure.

The method for generating a medium consistency probability of a sample fusion feature in this implementation clarifies that the mode of generating the sample fusion feature may be one or more of the dimension-wise mean value regularized fusion mode, the quantitative fusion mode, the spatial channel stacking fusion mode, and the dimensional differential fusion mode, thereby ensuring the quality of the fused feature, and improving the accuracy of the medium consistency probability predicted based on the fused feature.

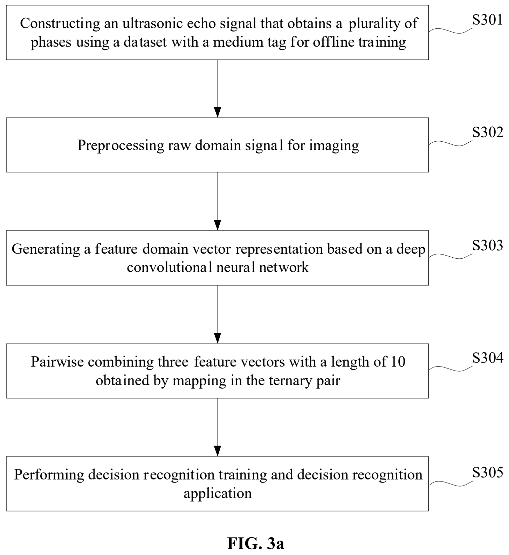

As one or more specific application embodiments among the embodiments of the present disclosure, the method for offline network training and online chip deployment provided in the present disclosure is described below in combination with a specific application scenario in FIG. 3a.

In this example, taking an ultrasonic fingerprint as an example, the following steps are included:

Step 1: constructing an ultrasonic echo signal that obtains a plurality of phases using a dataset with a medium tag for offline training. The ultrasonic echo signal can be denoted as a Raw signal.

Step 1.1: sampling raw domain signals for more than 2 (including 2) mediums using a preset fingerprint sensor (capacitive, optical, or ultrasonic). The pressing raw domain datasets of different medium components are expressed as A, B, C, ....

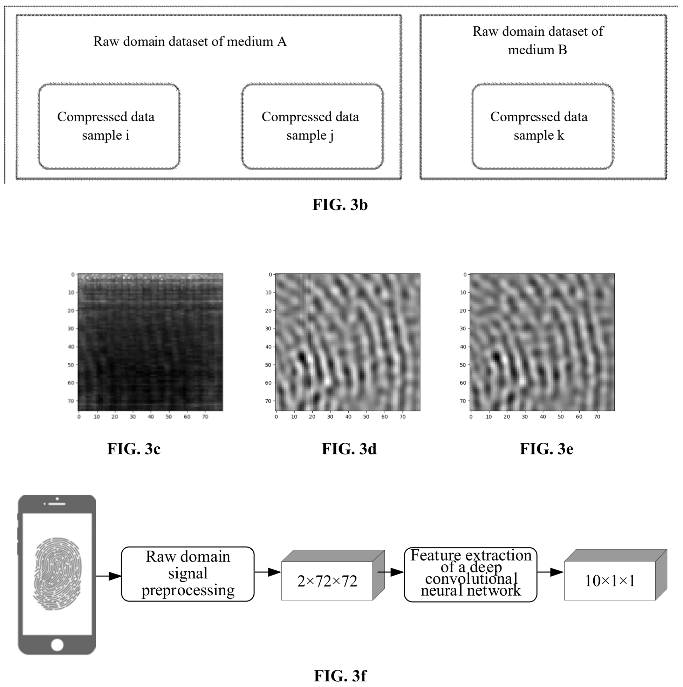

Step 1.2: constructing ternary pairs, each of the ternary pairs comprising two samples i and j from a same medium dataset, and another sample k from a different medium dataset. In an example, as shown in FIG. 3b, FIG. 3b shows an example schematic diagram of a ternary pair sample.

Step 2: preprocessing the Raw domain signals for imaging.

Considering that modalities of the raw domain signals inputted from different fingerprint sensors are significantly different, a particular preprocessing imaging process can be constructed before the data is sent to a network, and the Raw can be preprocessed to obtain Base fingerprint imaging. Then, the fingerprint imaging is preprocessed and enhanced to achieve spatial and temporal domain signal enhancement while retaining corresponding quantitative physical features of the mediums, and to retain three-dimensional features to the greatest extent. In an example, as shown in FIGS. 3c, 3d, and 3e, FIG. 3c is a schematic diagram of raw domain data; FIG. 3d is a schematic diagram of Base fingerprint imaging data; and FIG. 3e is a schematic diagram of preprocessed and enhanced fingerprint imaging.

Step 3: generating a feature (DL) domain vector representation based on a deep convolutional neural network.

Step 3.1: constructing, in this example, a set of feature vector extraction and representation technology based on the deep convolutional neural network, to convert a single-frame fingerprint echo signal tensor in a dimension of 2x72x72 outputted after the preprocessing the Raw domain signals in the step 2 into a 10-dimensional implicit physical medium feature vector of 10×1×1. Specifically, as shown in FIG. 3f, FIG. 3f shows a feature (DL) domain vector representation based on a Deep Convolutional Neutral Network.

The deep convolutional neural network comprises three subnetworks, namely, a spatial domain enhancement subnetwork, a feature extraction subnetwork, and a medium description subnetwork. The spatial domain enhancement subnetwork is configured to simulate preprocessing and enhancement without changing the spatial resolution and the number of channels; the feature extraction layer completes the spatial resolution reduction and the increase of the number of channels of the raw domain signals through stacking and combination of the convolutional layer and the pooling layer, to prepare features for subsequent semantic description information extraction; and finally, the medium description subnetwork performs information integration and semantic extraction on a spatially concentrated feature tensor to generate a 10-dimensional feature descriptor for representing medium features of current single-frame pressing data. The feature vector is essentially description of features of a 10-dimensional implicit physical medium of a current pressing signal.

Specifically, a structural table of a feature extraction network using a deep convolutional neural network is as shown in the table below.

| Subnetwork | Layer name | Network description |
|---|---|---|
| Spatial enhancement | Convolutional layer (Conv) | Convolution kernel of a first size |
| Feature extraction | First convolutional block (Block D&R (1)) | Continuously stacking of a plurality of convolution kernels of a second size |
| | First transition layer (Transition Layer (1)) | Convolution kernel of a third size |
| | | Average pooling of a first preset size |
| | Second convolutional block (Block D&R (2)) | Continuously stacking of a plurality of convolution kernels of a fourth size |
| | Second transition layer (Transition Layer (1)) | Convolution kernel of a fifth size |
| | | Average pooling of a second preset size |
| Medium description | Depth-wise Conv | Convolution kernel of a sixth size |
| | | Average pooling of a third preset size |

Step 3.2: performing feature mapping on the three samples $Samp_A^i$, $i \in$ [1,2,3] in the ternary pair, to obtain three feature vectors $Feat_A^i$, $i \in$ [1,2,3] with a length of 10.

Step 4: pairwise combining the three feature vectors with a length of 10 obtained by mapping in the ternary pair.

Two 10-dimensional feature vectors from the same medium dataset are combined into a same medium positive sample $[Feat_A^1, \ Feat_A^2]$ assigned with a tag 1, and two 10-dimensional feature vectors from non-same medium datasets are combined into a non-homologous negative sample $[Feat_A^1, \ Feat_A^3]$ assigned with a tag 0.

Step 5: performing decision recognition training and decision recognition application.

Step 5.1: building a fully connected network, and constructing a decision classification layer of a feature fusion classification network, to implement medium sameness classification and recognition based on the positive and negative fusion samples obtained in the step 4.

Step 5.2: performing gradient back-propagation using a binary cross entropy loss function based on the consistency between the classification results and the real tags of a positive sample set and a negative sample set predicted by the feature fusion classification network:

$$Loss_{BCE} = -y \cdot log(x) - (1-y) \cdot \log(1-x)$$

Further, in accordance with a sequence of the gradient back-propagation, parameters of the fully connected decision classification layer and the deep convolutional neural network in the step 3 are updated sequentially, to achieve performance optimization and training iteration, until the number of loop iterations (epochs) of the provided training dataset reaches 200, or the loss function reaches a preset value, the iteration is ended, the gradient back-propagation is ended, weight coefficients in the network are no longer updated, and the fully connected decision classification layer and the deep convolutional neural network in the step 3 are saved respectively.

Step 5.3: first loading, in a practical deployment application, a saved weight of the deep learning network using parameters when iterative training is ended, and extracting 10-dimensional physical medium feature descriptors

$Feat_{\text{template}}^{(i,j)}$ , $i \in [1,2,3, \cdots , N]$, $j \in [1,2,3, \cdots , M]$, and $Feat_{\text{sample}}^{k}$ for all registered fingerprint template data and current to-be-verified fingerprint data (that is, a current unlocking and pressing sample) using steps 2, 3, and 4 respectively. $i$ is IDs of all entered fingers, totaling N fingers. $j$ is the number of entries of an ID of each entered finger, totaling M registrations by pressing.

Compared with the need for i×j registered sample recognitions and storages of image data at original resolutions in the related art, it is only necessary to retain a 10-dimensional descriptor for each registered fingerprint template data in the present disclosure, for subsequent fusion and final decision classification. Taking the dimension 2×80×80 of an ultrasonic under-screen fingerprint as an example, storage consumption in the present disclosure is effectively reduced to 1/1280 of related technical solutions, which basically solves the storage bottleneck problem of shallow fusion of such stored original templates.

Step 5.4: indexing a registration number [i', j'] with a best matching finger ID and texture corresponding to the current to-be-verified fingerprint data (that is, the current unlocking and pressing sample) k using a fingerprint matching result, extracting a corresponding $Feat_{\text{template}}^{(i',j')}$ from medium descriptors of the pre-stored i×j registered fingerprint template data, and performing combination $\left[ Feat_{\text{template}}^{(i',j')}, \ Feat_{\text{sample}}^{k} \right]$ on the extracted medium descriptors and an unlocked medium descriptor with reference to the step 4.

Step 5.5: loading a fully connected classification layer built in the step 5.1 to train weights, performing fully connected feedforward calculation on a medium fusion vector in the step 5.4, performing decision recognition on the regular feature, to obtain a medium sameness score, determining, in response to the score being greater than 0.5, that the medium is same as the medium of the registered fingerprint template data, and otherwise, determining that the medium is different from the medium of the registered fingerprint template data.

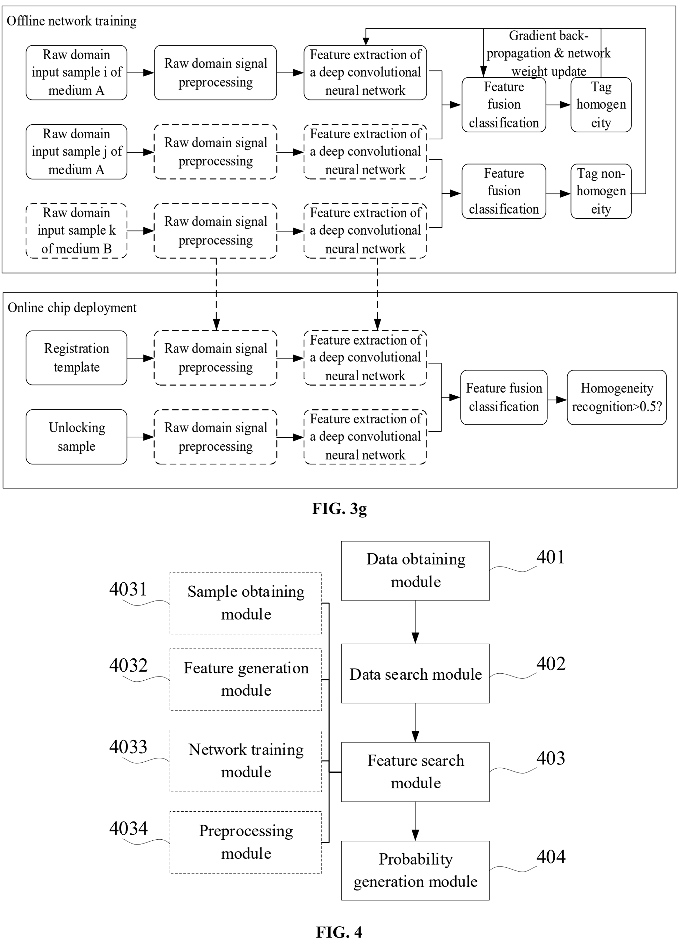

Specifically, further referring to FIG. 3g, FIG. 3g shows a schematic flowchart of offline network training and online chip deployment of the technical solutions in the above FIG. 3a.

In quantitative comparative analysis of fingerprint recognition using the method for recognizing fingerprint medium consistency in the present disclosure, False Liveness Reject Rate (FLRR, also known as liveness reject rate) and Spoof Accept Rate (SAR) can be used as performance evaluation indicators.

$$FLRR = \frac{No.Liveness\ Rejection}{No.Liveness\ Pressing}$$

$$SAR = \frac{No.Spoof\ Accept}{No.Spoof\ Attach}$$

*FLRR* refers to a proportion, expressed as a percentage, of fingerprint images of a same finger collected respectively being ascertained as non-same fingers during 1:1 matching. *No. Liveness Rejectionrefers* to the number of rejections of liveness fingerprint data; and No. Liveness Pressing refers to the number of pressings of liveness fingerprint data. *SAR* refers to a proportion, expressed as a percentage, of fingerprint images of different fingers collected respectively being mistakenly ascertained as a same finger during matching. *No. Spoof Accept* refers to the number of accepts of spoof fingerprint data, and No. Spoof Attach refers to the number of attaches of spoof fingerprint data to verification.

The table below shows performance benefits of an anti-counterfeiting task brought in an Experiment using the method for recognizing fingerprint medium consistency in the present disclosure. In addition, compared with storage of registration template features of the raw image domain, the solutions of the present disclosure can be used to convert to-be-prestored registration template information into a 10-dimensional feature descriptor of the registered fingerprint template data, thus reducing pre-stored data to 1/1280 of the original pre-stored data, and completely solving the core difficulty in too much registration template storage information and failure in mass production. F1 Score, also known as balanced F score, is an indicator used in statistics to measure the accuracy of a binary classification model, and is a harmonic mean of precision and recall rate of a classification model.

| Experiment | FLRR | SAR | F1 Score |
|---|---|---|---|
| No anti-counterfeiting function | 2.43% | 61.51% | 0.5520 |
| Binary classification model of static liveness and spoof fingerprints | 24.21% | 34.15% | 0.7047 |
| Tag-guided medium sameness detection | 3.65% | 6.14% | 0.9508 |

In this embodiment, an apparatus for recognizing fingerprint medium consistency is further provided. The apparatus is configured to implement the above embodiments and preferred embodiments, and the descriptions that have been provided will not be repeated. As used below, the term "module" may be a combination of software and/or hardware capable of implementing a predetermined function. Although the apparatus described in the following embodiments is preferably implemented by software, the implementation by hardware or a combination of software and hardware is also possible and conceived of.

An apparatus for recognizing fingerprint medium consistency provided in this embodiment, as shown in FIG. 4, comprises:

a data obtaining module 401 configured to obtain current to-be-verified fingerprint data;

a data search module 402 configured to search for target fingerprint template data matching the current to-be-verified fingerprint data in a registered fingerprint template dataset;

a feature search module 403 configured to search for a target feature descriptor corresponding to the target fingerprint template data in a template feature descriptor set, wherein the template feature descriptor set is generated using a pre-trained feature extraction network based on the registered fingerprint template dataset; and

a probability generation module 404 configured to generate a verification feature descriptor using the pre-trained feature extraction network based on the current to-be-verified fingerprint data, and generate a current medium consistency probability of a verification fusion feature using a pre-trained feature fusion classification network based on the verification feature descriptor and the target feature descriptor, wherein the fusion feature is obtained by fusion of the verification feature descriptor and the target feature descriptor.

In some optional implementations of this embodiment, the pre-trained feature extraction network used by the feature search module 403 and the pre-trained feature fusion classification network used by the probability generation module are obtained by training the following modules:

a sample obtaining module 4031 configured to obtain a ternary pair sample in a ternary pair sample set, wherein the ternary pair sample comprises an anchor sample of fingerprint data, a positive training sample, and a negative training sample, wherein the anchor sample and the positive training sample are of a same template medium, and the anchor sample and the negative training sample are of different template mediums;

a feature generation module 4032 configured to generate three feature descriptors using an initial feature extraction network based on the ternary pair sample, wherein the three feature descriptors comprise: an anchor feature descriptor of the anchor sample, a positive feature descriptor of the positive training sample, and a negative feature descriptor of the negative training sample; and

a network training module 4033 configured to generate a medium consistency probability of a sample fusion feature using an initial feature fusion classification network based on the three feature descriptors, generate a loss of the medium consistency probability and a real tag of the sample fusion feature, and update a parameter value of the initial feature fusion classification network and a parameter value of the initial feature extraction network using gradient back-propagation of the loss, until the number of trainings reaches a preset number of iterations or the loss satisfies a preset target, to obtain the pre-trained feature extraction network and the pre-trained feature fusion classification network; wherein the sample fusion feature comprises: a positive sample fusion feature obtained by fusion of the anchor feature descriptor and the positive feature descriptor, and a negative sample fusion feature obtained by fusion of the anchor feature descriptor and the negative feature descriptor.

In some optional implementations of this embodiment, the initial feature extraction network trained by the feature generation module 4032 comprises: a spatial domain enhancement subnetwork, a feature extraction subnetwork, and a medium description subnetwork connected sequentially; wherein the spatial domain enhancement subnetwork preprocesses inputted fingerprint data to obtain a preprocessed feature tensor; the feature extraction subnetwork reduces a spatial resolution of the preprocessed feature tensor, and increases the number of channels of the preprocessed feature tensor, to obtain a spatially concentrated feature tensor; and the medium descriptor subnetwork performs information integration and semantic extraction on the spatially concentrated feature tensor to obtain feature descriptors in a preset number of dimensions representing features of a physical medium.

In some optional implementations of this embodiment, the spatial domain enhancement subnetwork trained by the feature generation module 4032 comprises: a first convolutional layer; the feature extraction subnetwork comprises: a first convolutional block, a first transition layer, a second convolutional block, and a second transition layer connected sequentially; wherein the first convolutional block is formed by continuously stacking a plurality of convolution kernels of a preset size; the first transition layer comprises a second convolutional layer and a first average pooling layer connected sequentially; the second convolutional block is formed by continuously stacking a plurality of convolution kernels of a preset size; the second transition layer comprises a third convolutional layer and a second average pooling layer connected sequentially; and the medium description subnetwork comprises: a depth-wise separable convolutional layer, and the depth-wise separable convolutional layer comprises a fourth convolutional layer and a third average pooling layer connected sequentially.

In some optional implementations of this embodiment, the pre-trained feature extraction network used by the feature search module 403 and the pre-trained feature fusion classification network used by the probability generation module are obtained through training of the following modules, and further comprise: a preprocessing module 4034 configured to perform at least one of preprocessing imaging below on the ternary pair sample: spatial domain rotation, affine transformation, displacement, flipping, denoising, enhancement, range quantization, temporal domain smoothing, and temporal domain amplitude extraction; and the feature generation module 4032 is further configured to: generate the three feature descriptors using the initial feature extraction network based on the ternary pair sample after preprocessing imaging.

In some optional implementations of this embodiment, when generating the medium consistency probability of the sample fusion feature, the initial feature fusion classification network used by the network training module 4033 generates the sample fusion feature based on at least one of: a dimension-wise mean value regularized fusion mode, a quantitative fusion mode, a spatial channel stacking fusion mode, and a dimensional differential fusion mode.

In some optional implementations of this embodiment, a medium of the target fingerprint template data searched for by the data search module 402 comprises at least one of: pericarp, skin, white rubber, black rubber, resin, print paper, a conductive pen, carbon powder, and dust.

Further function description of the above modules and units is same as that in the above corresponding embodiments, and will not be repeated here. The apparatus for recognizing fingerprint medium consistency in this embodiment is presented in the form of a functional unit, wherein the unit here refers to an ASIC (Application Specific Integrated Circuit), a processor that executes one or more software or fixed programs, a memory, and/or other devices that can provide the above functions.

In this embodiment, an apparatus is further provided, comprising:

a fingerprint sensor system configured to obtain current to-be-verified fingerprint data;

a memory system; and

a control system configured to electrically communicate with an ultrasonic fingerprint sensor system, and further configured to: execute the method for recognizing fingerprint medium consistency in the above embodiments or any one corresponding embodiment thereof.

In this embodiment, an apparatus is further provided, comprising:

a fingerprint sensor system configured to obtain current to-be-verified fingerprint data;

a memory system; and

a control apparatus configured to cause a computer to execute the method for recognizing fingerprint medium consistency in the above embodiments or any one corresponding embodiment thereof.

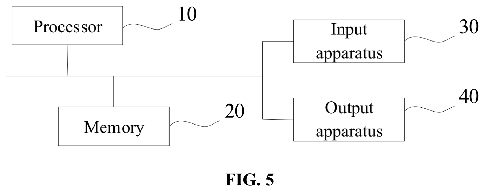

Referring to FIG. 5, FIG. 5 is a schematic structural diagram of a computer device provided in an optional embodiment of the present disclosure. The computer device comprises: one or more processors 10, a memory 20, and interfaces for connection to various components, comprising a high-speed interface and a low-speed interface. The various components are communicatively connected to each other using different buses, and may be mounted on a common motherboard or in other manners as required. The processor may process instructions for execution within the computer device, comprising instructions stored in the memory or on the memory to display graphical information for a GUI on an external input/output apparatus (e.g., a display device coupled to an interface). In some optional embodiments, a plurality of processors and/or a plurality of buses may be used, when necessary, along with a plurality of memories and a plurality of memories. Similarly, a plurality of computer devices may be connected, with each device providing portions of necessary operations (e.g., as a server array, a group of blade servers, or a multi-processor system).

The processor 10 may be a central processing unit, a network processor, or a combination thereof. The processor 10 may further comprise a hardware chip. The above hardware chip may be a dedicated integrated circuit, a programmable logic device, or a combination thereof. The above programmable logic device may be a complex programmable logic device, a field programmable gate array, a general array logic, or any combination thereof.

The memory 20 stores instructions executable by at least one processor 10, so that the at least one processor 10 executes the method shown in the above embodiments.

The memory 20 may comprise a program storage area and a data storage area, wherein the program storage area may store an operating system and an application program required by at least one function; and the data storage area may store, e.g., data created based on use of the computer device. Further, the memory 20 may include a high-speed random access memory, and may further include a non-transitory memory, such as at least one disk memory device, a flash device, or other non-transitory solid-state memory devices. In some optional embodiments, the memory 20 optionally includes a memory remotely arranged relative to the processor 10, and these remote memories may be connected to the computer device via a network. Examples of the above network include, but are not limited to, the Internet, an intranet, a local area network, a mobile communication network, and a combination thereof.

The memory 20 may include a volatile memory, such as a random access memory; the memory may further include a non-volatile memory, such as a flash memory, a hard disk, or a solid state disk; and the memory 20 may further include a combination of the above memory types.

The computer device further comprises an input apparatus 30 and an output apparatus 40. The processor 10, the memory 20, the input apparatus 30, and the output apparatus 40 may be connected through a bus or by other means.

The input apparatus 30 may receive inputted digital or character information, and generate a keying signal input related to user settings and function control of the computer device, such as a touch screen, a keypad, a mouse, a trackpad, a touchpad, an indicating arm, one or more mouse buttons, a trackball, and a joystick. The output apparatus 40 may include a display device, an auxiliary lighting apparatus (e.g., an LED), a haptic feedback apparatus (e.g., a vibration motor), and the like. The above display device includes, but is not limited to, a liquid crystal display, a light emitting diode, a display, and a plasma display. In some optional embodiments, the display device may be a touch screen.

An embodiment of the present disclosure further provides a computer-readable storage medium, and the above method according to the embodiments of the present disclosure may be implemented in hardware or firmware, or be implemented as a computer code that may be recorded in a storage medium, or be downloaded through a network and originally stored in a remote storage medium or a non-transitory machine-readable storage medium, and will be stored in a local storage medium, so that the method described herein may be processed by such software stored on a storage medium using a universal computer, a dedicated processor, or programmable or dedicated hardware. The storage medium may be, e.g., a magnetic disk, an optical disk, a read-only memory, a random access memory, a flash memory, a hard disk, or a solid state disk; and further, the storage medium may further include a combination of the above memory types. It is understandable that a computer, a processor, a microprocessor controller, or programmable hardware includes a storage component that can store or receive software or a computer code. The method shown in the above embodiments is implemented when the software or the computer code is accessed and executed by the computer, the processor, or the hardware.

A part of the present disclosure can be applied as a computer program product, such as a computer program instruction, which can, when executed by a computer, invoke or provide the method and/or technical solutions according to the present disclosure through operations of the computer. Those skilled in the art should understand that the existence form of the computer program instruction in the computer-readable medium includes, but is not limited to, a source file, an executable file, an installation package file, etc., and accordingly, the way in which the computer program instruction is executed by the computer includes, but is not limited to: the computer directly executes the instruction, or the computer compiles the instruction and then executes the corresponding compiled program, or the computer reads and executes the instruction, or the computer reads and installs the instruction and then executes the corresponding installed program. Here, the computer-readable medium may be any available computer-readable storage medium or communication medium that can be accessed by the computer.

Although the embodiments of the present disclosure are described in conjunction with the drawings, those skilled in the art may make various alterations and modifications without departing from the spirit and scope of the present disclosure, and such alterations and modifications are all encompassed within the scope defined by the appended claims.

# EP 4 723 064 A1

**Claims**

1. A method for recognizing fingerprint medium consistency, comprising:

   obtaining current to-be-verified fingerprint data;
   searching for target fingerprint template data matching the current to-be-verified fingerprint data in a registered fingerprint template dataset;
   searching for a target feature descriptor corresponding to the target fingerprint template data in a template feature descriptor set, wherein the template feature descriptor set is generated using a pre-trained feature extraction network based on the registered fingerprint template dataset; and
   generating a verification feature descriptor using the pre-trained feature extraction network based on the current to-be-verified fingerprint data, and generating a current medium consistency probability of a verification fusion feature using a pre-trained feature fusion classification network based on the verification feature descriptor and the target feature descriptor, wherein the verification fusion feature is obtained by fusion of the verification feature descriptor and the target feature descriptor.

2. The method according to claim 1, wherein the pre-trained feature extraction network and the pre-trained feature fusion classification network are trained by:

   obtaining a ternary pair sample in a ternary pair sample set, wherein the ternary pair sample comprises an anchor sample of fingerprint data, a positive training sample, and a negative training sample, wherein the anchor sample and the positive training sample are of a same template medium, and the anchor sample and the negative training sample are of different template mediums;
   generating three feature descriptors using an initial feature extraction network based on the ternary pair sample, wherein the three feature descriptors comprise: an anchor feature descriptor of the anchor sample, a positive feature descriptor of the positive training sample, and a negative feature descriptor of the negative training sample; and
   generating a medium consistency probability of a sample fusion feature using an initial feature fusion classification network based on the three feature descriptors, generating a loss of the medium consistency probability and a real tag of the sample fusion feature, and updating a parameter value of the initial feature fusion classification network and a parameter value of the initial feature extraction network using gradient back-propagation of the loss, until a number of trainings reaches a preset number of iterations or the loss satisfies a preset target, to obtain the pre-trained feature extraction network and the pre-trained feature fusion classification network; wherein the sample fusion feature comprises: a positive sample fusion feature obtained by fusion of the anchor feature descriptor and the positive feature descriptor, and a negative sample fusion feature obtained by fusion of the anchor feature descriptor and the negative feature descriptor.

3. The method according to claim 2, wherein the initial feature extraction network comprises: a spatial domain enhancement subnetwork, a feature extraction subnetwork, and a medium description subnetwork connected sequentially; and
   generating the three feature descriptors using the initial feature extraction network based on the ternary pair sample comprises:

   preprocessing and enhancing the ternary pair sample using the spatial domain enhancement subnetwork to obtain a preprocessed feature tensor;
   reducing a spatial resolution of the preprocessed feature tensor using the feature extraction subnetwork, and increasing a number of channels of the preprocessed feature tensor, to obtain a spatially concentrated feature tensor; and
   performing information integration and semantic extraction on the spatially concentrated feature tensor using the medium description subnetwork, to obtain feature descriptors in a preset number of dimensions representing features of a physical medium.

4. The method according to claim 3, wherein the spatial domain enhancement subnetwork comprises: a first convolutional layer;

   the feature extraction subnetwork comprises: a first convolutional block, a first transition layer, a second convolutional block, and a second transition layer connected sequentially; wherein the first convolutional block is formed by continuously stacking a plurality of convolution kernels of a preset size; the first transition layer comprises a second convolutional layer and a first average pooling layer connected sequentially; the second convolutional block is formed by continuously stacking a plurality of convolution kernels of a preset size; the second transition layer comprises a third convolutional layer and a second average pooling layer connected sequentially; and

the medium description subnetwork comprises: a depth-wise separable convolutional layer, the depth-wise separable convolutional layer comprising a fourth convolutional layer and a third average pooling layer connected sequentially.

5. The method according to claim 2, wherein the pre-trained feature extraction network and the pre-trained feature fusion classification network are trained by, and further comprise: performing at least one of preprocessing imaging below on the ternary pair sample: spatial domain rotation, affine transformation, displacement, flipping, denoising, enhancement, range quantization, temporal domain smoothing, and temporal domain amplitude extraction; and generating the three feature descriptors using the initial feature extraction network based on the ternary pair sample comprises: generating the three feature descriptors using the initial feature extraction network based on the ternary pair sample after preprocessing imaging.

6. The method according to claim 2, wherein when generating the medium consistency probability of the sample fusion feature, the initial feature fusion classification network generates the sample fusion feature based on at least one of: a dimension-wise mean value regularized fusion mode, a quantitative fusion mode, a spatial channel stacking fusion mode, and a dimensional differential fusion mode.

7. The method according to claim 1, wherein a medium of the target fingerprint template data comprises at least one of: pericarp, skin, white rubber, black rubber, resin, print paper, a conductive pen, carbon powder, and dust.

8. An apparatus for recognizing fingerprint medium consistency, comprising:

a data obtaining module configured to obtain current to-be-verified fingerprint data;
a data search module configured to search for target fingerprint template data matching the current to-be-verified fingerprint data in a registered fingerprint template dataset;
a feature search module configured to search for a target feature descriptor corresponding to the target fingerprint template data in a template feature descriptor set, wherein the template feature descriptor set is generated using a pre-trained feature extraction network based on the registered fingerprint template dataset; and
a probability generation module configured to generate a verification feature descriptor using the pre-trained feature extraction network based on the current to-be-verified fingerprint data, and generate a current medium consistency probability of a verification fusion feature using a pre-trained feature fusion classification network based on the verification feature descriptor and the target feature descriptor, wherein the verification fusion feature is obtained by fusion of the verification feature descriptor and the target feature descriptor.

9. The apparatus according to claim 8, wherein the apparatus further comprises:

a sample obtaining module configured to obtain a ternary pair sample in a ternary pair sample set, wherein the ternary pair sample comprises an anchor sample of fingerprint data, a positive training sample, and a negative training sample, wherein the anchor sample and the positive training sample are of a same template medium, and the anchor sample and the negative training sample are of different template mediums;
a feature generation module configured to generate three feature descriptors using an initial feature extraction network based on the ternary pair sample, wherein the three feature descriptors comprise: an anchor feature descriptor of the anchor sample, a positive feature descriptor of the positive training sample, and a negative feature descriptor of the negative training sample; and
a network training module configured to generate a medium consistency probability of a sample fusion feature using an initial feature fusion classification network based on the three feature descriptors, generate a loss of the medium consistency probability and a real tag of the sample fusion feature, and update a parameter value of the initial feature fusion classification network and a parameter value of the initial feature extraction network using gradient back-propagation of the loss, until a number of trainings reaches a preset number of iterations or the loss satisfies a preset target, to obtain the pre-trained feature extraction network and the pre-trained feature fusion classification network; wherein the sample fusion feature comprises: a positive sample fusion feature obtained by fusion of the anchor feature descriptor and the positive feature descriptor, and a negative sample fusion feature obtained by fusion of the anchor feature descriptor and the negative feature descriptor.

10. The apparatus according to claim 9, wherein the initial feature extraction network comprises: a spatial domain enhancement subnetwork, a feature extraction subnetwork, and a medium description subnetwork connected sequentially; and

the feature generation module is configured to preprocess and enhance the ternary pair sample using the spatial domain enhancement subnetwork to obtain a preprocessed feature tensor; reduce a spatial resolution of the preprocessed feature tensor using the feature extraction subnetwork, and increase a number of channels of the preprocessed feature tensor, to obtain a spatially concentrated feature tensor; and perform information integration and semantic extraction on the spatially concentrated feature tensor using the medium description subnetwork, to obtain feature descriptors in a preset number of dimensions representing features of a physical medium.

11. The apparatus according to claim 10, wherein the spatial domain enhancement subnetwork comprises: a first convolutional layer;

the feature extraction subnetwork comprises: a first convolutional block, a first transition layer, a second convolutional block, and a second transition layer connected sequentially; wherein the first convolutional block is formed by continuously stacking a plurality of convolution kernels of a preset size; the first transition layer comprises a second convolutional layer and a first average pooling layer connected sequentially; the second convolutional block is formed by continuously stacking a plurality of convolution kernels of a preset size; the second transition layer comprises a third convolutional layer and a second average pooling layer connected sequentially; and

the medium description subnetwork comprises: a depth-wise separable convolutional layer, the depth-wise separable convolutional layer comprising a fourth convolutional layer and a third average pooling layer connected sequentially.

12. The apparatus according to claim 9, wherein the apparatus further comprises: a preprocessing module;

the preprocessing module is configured to: perform at least one of preprocessing imaging below on the ternary pair sample: spatial domain rotation, affine transformation, displacement, flipping, denoising, enhancement, range quantization, temporal domain smoothing, and temporal domain amplitude extraction; and

the feature generation module is configured to generate the three feature descriptors using the initial feature extraction network based on the ternary pair sample after preprocessing imaging.

13. The apparatus according to claim 9, wherein

the network training module is configured to generate, when the initial feature fusion classification network generates the medium consistency probability of the sample fusion feature, the sample fusion feature based on at least one of: a dimension-wise mean value regularized fusion mode, a quantitative fusion mode, a spatial channel stacking fusion mode, and a dimensional differential fusion mode.

14. The apparatus according to claim 8, wherein

a medium of the target fingerprint template data searched for by the data search module comprises at least one of: pericarp, skin, white rubber, black rubber, resin, print paper, a conductive pen, carbon powder, and dust.

15. An apparatus, comprising:

a fingerprint sensor system configured to obtain current to-be-verified fingerprint data;
a memory system; and
a control system configured to electrically communicate with an ultrasonic fingerprint sensor system, and further configured to: execute the method for recognizing fingerprint medium consistency according to any one of claims 1 to 7.

16. An apparatus, comprising:

a fingerprint sensor system configured to obtain current to-be-verified fingerprint data;
a memory system; and
a control apparatus configured to execute the method for recognizing fingerprint medium consistency according to any one of claims 1 to 7.

Obtaining current to-be-verified fingerprint data — S101

Searching for target fingerprint template data matching the current to-be-verified fingerprint data in a registered fingerprint template dataset — S102

Searching for a target feature descriptor corresponding to the target fingerprint template data in a template feature descriptor set — S103

Generating a verification feature descriptor using a pre-trained feature extraction network based on the current to-be-verified fingerprint data, and generating a current medium consistency probability of a verification fusion feature using a pre-trained feature fusion classification network based on the verification feature descriptor and the target feature descriptor — S104

**FIG. 1**

Obtaining a ternary pair sample in a ternary pair sample set — S201

Generating three feature descriptors using an initial feature extraction network based on the ternary pair sample — S202

Generating a medium consistency probability of a sample fusion feature using an initial feature fusion classification network based on the three feature descriptors, generating a loss of the medium consistency probability and a real tag of the sample fusion feature, and updating a parameter value of the initial feature fusion classification network and a parameter value of the initial feature extraction network using gradient back-propagation of the loss, until the number of trainings reaches a preset number of iterations or the loss satisfies a preset target, to obtain a pre-trained feature extraction network and a pre-trained feature fusion classification network — S203

**FIG. 2**

| Constructing an ultrasonic echo signal that obtains a plurality of phases using a dataset with a medium tag for offline training | S301 |

| Preprocessing raw domain signal for imaging | S302 |

| Generating a feature domain vector representation based on a deep convolutional neural network | S303 |

| Pairwise combining three feature vectors with a length of 10 obtained by mapping in the ternary pair | S304 |

| Performing decision recognition training and decision recognition application | S305 |

**FIG. 3a**

**FIG. 3b**

**FIG. 3c**

**FIG. 3d**

**FIG. 3e**

**FIG. 3f**

**Offline network training**

| Raw domain input sample i of medium A | → | Raw domain signal preprocessing | → | Feature extraction of a deep convolutional neural network |

| Raw domain input sample j of medium A | → | Raw domain signal preprocessing | → | Feature extraction of a deep convolutional neural network |

| Raw domain input sample k of medium B | → | Raw domain signal preprocessing | → | Feature extraction of a deep convolutional neural network |

Gradient back-propagation & network weight update

Feature fusion classification → Tag homogeneity

Feature fusion classification → Tag non-homogeneity

**Online chip deployment**

| Registration template | → | Raw domain signal preprocessing | → | Feature extraction of a deep convolutional neural network |

| Unlocking sample | → | Raw domain signal preprocessing | → | Feature extraction of a deep convolutional neural network |

Feature fusion classification → Homogeneity recognition>0.5?

**FIG. 3g**

Data obtaining module — 401

4031 — Sample obtaining module

Data search module — 402

4032 — Feature generation module

4033 — Network training module

Feature search module — 403

4034 — Preprocessing module

Probability generation module — 404

**FIG. 4**

Processor 10

Input apparatus 30

Memory 20

Output apparatus 40

**FIG. 5**

## INTERNATIONAL SEARCH REPORT

| International application No. |
|---|
| **PCT/CN2024/138576** |

| A. | CLASSIFICATION OF SUBJECT MATTER |
|---|---|

G06V 40/12(2022.01)i; G06V 10/44(2022.01)i; G06V 10/82(2022.01)i

According to International Patent Classification (IPC) or to both national classification and IPC

| B. | FIELDS SEARCHED |
|---|---|

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 指纹, 识别, 介质, 材质, 材料, 一致, 训练, 网络, 特征, 概率, fingerprint, identify, medium, consistency, train, network, feature, probability

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119091472 A (SHENZHEN GOODIX TECHNOLOGY CO., LTD.) 06 December 2024 (2024-12-06)<br>claims 1-10, and description, paragraphs [0151]-[0164] | 1-16 |
| A | CN 118470807 A (XIDIAN UNIVERSITY) 09 August 2024 (2024-08-09)<br>description, paragraphs [0002]-[0003] and [0036]-[0149], and figures 1-9 | 1-16 |
| A | CN 109074489 A (SHENZHEN GOODIX TECHNOLOGY CO., LTD.) 21 December 2018 (2018-12-21)<br>entire document | 1-16 |
| A | US 2022012464 A1 (SAMSUNG ELECTRONICS CO., LTD.) 13 January 2022 (2022-01-13)<br>entire document | 1-16 |
| A | US 2022262161 A1 (HUAWEI TECHNOLOGIES CO., LTD.) 18 August 2022 (2022-08-18)<br>entire document | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 May 2025** | **09 May 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/138576**

| Patent document cited in search report | | | Publication date (day/month/year) | Patent family member(s) | | | Publication date (day/month/year) |
|---|---|---|---|---|---|---|---|
| CN | 119091472 | A | 06 December 2024 | None | | | |
| CN | 118470807 | A | 09 August 2024 | None | | | |
| CN | 109074489 | A | 21 December 2018 | WO | 2020014959 | A1 | 23 January 2020 |
| US | 2022012464 | A1 | 13 January 2022 | KR | 20220008035 | A | 20 January 2022 |
| US | 2022262161 | A1 | 18 August 2022 | WO | 2021008551 | A1 | 21 January 2021 |
| | | | | EP | 3985553 | A1 | 20 April 2022 |
| | | | | CN | 112241657 | A | 19 January 2021 |

Form PCT/ISA/210 (patent family annex) (July 2022)

**REFERENCES CITED IN THE DESCRIPTION**

**Patent documents cited in the description**

- CN 202411127429